# EUROPEAN PATENT APPLICATION

(11) **EP 1 303 156 A1**
(43) Date of publication of application: **16.04.2003**
(21) Application number: 01402618.1
(22) Date of filing: 10.10.2001
(51) Int. Cl.: H04Q 7/38

(54) **User selectable quality of service**

(71) Applicant: MOTOROLA, INC., Schaumburg, IL 60196 (US)
(72) Inventor: Deloume, Pascal Stephane, 31170 Torunefeuille (FR); Garani, Pradeep, 31000 Toulouse (FR)
(74) Representative: Litchfield, Laura Marie

(57) **Abstract**

The present application relates to user selectable quality of service in packet data systems. The present invention relates in particular to a subscriber device which enables user selection of quality of service.

A plurality of quality of service parameter profiles (10, 12, 14, 16) are provided and the user is able to select a quality of service parameter profile for use in negotiating a quality of service for a wireless communication. The quality of service parameter profiles (10, 12, 14, 16) contain a plurality of data sets (R1-R5) relating to at least one quality of service parameter (R,T,P,D) and means for identifying a selected one of the plurality of data sets (CII, I).

## Description

The present application relates to user selectable quality of service in packet data systems. The present invention relates in particular to a subscriber device which enables user-selection of quality of service.

Previously on existing circuit switched networks it has not been necessary or possible to select the quality of service (QoS) provided by the communications system to the user. Packet-switched networks such as General Packet Radio Service (GPRS), Enhanced General Packet Radio Service (EGPRS) and Universal Mobile Telecommunication System (UMTS) are now being implemented and, because the connection is achieved using a plurality of packets instead of by a dedicated circuit, there arises flexibility in the way the packets can be handled which can give rise to flexibility in the quality of service delivered.

There are different parameters that may be used to measure or evaluate quality of service. For instance, two important measurements of quality of service relate to the latency of the packets, i.e. how much delay packets experience, and the throughput or data rate, i.e. how much data can be transferred in a given time.

Clearly, different applications require different quality of service. For example, the transmission of speech over a packet data network requires a relatively low data rate, but requires that each packet is transmitted with low latency (i.e. minimal delay). In contrast, to download a picture file a relatively high data rate is desirable to minimize the time needed for the download, although the delay experienced by each packet during transmission can be relatively large.

In general, messages are available to manage quality of service on links such as on the air interface between a subscriber device and a packet data network. The subscriber device and the packet data network negotiate the quality of service to be provided for a communication between the subscriber device and the packet data network depending on the type of communication/service required. This quality of service management is carried out automatically as a negotiation between the application and the network and the user has little choice in deciding parameters used to control quality of service.

For example, as is commonly known, when a user starts a video session, the application negotiates a particular quality of service. The application may further request a change in the quality of service during the communication. The end user does not typically fine tune or effect a change in quality of service. There is typically no means of advantageously providing capability to the user to initiate negotiation for increasing data rates or decreasing delay or cost associated with packet connections.

While most current networks operate on a "best effort" basis, a business model for charging for packet connections with different quality of service has not emerged and applications and user interfaces to date have not been sensitive to this aspect.

The present invention seeks to alleviate some of the disadvantages of the prior art.

In accordance with the present invention, there is provided a subscriber device having user controllable means operable to select the quality of service delivered in a wireless communication between the subscriber device and a communication system.

In an advantageous arrangement the subscriber device, in use, comprises a memory containing a plurality of quality of service parameter profiles. Preferably the memory is provided in a SIM removable smart card.

The subscriber device may further comprise a control means for negotiating quality of service delivered in a wireless communication on the basis of a quality of service parameter profile selected by the user. In addition, the subscriber device preferably has a MMI arranged to enable user selection of a quality of service parameter profile for use in negotiating quality of service delivered in a wireless communication.

For a better understanding of the present invention, and to show how it may be brought into effect, reference will now be made, by way of example, to the accompanying drawings, in which:
Figure 1 is a schematic drawing of a wireless network and a subscriber device in accordance with an embodiment of the invention;
Figure 2 is an exemplary illustration of quality of service parameter profiles;
Figure 3 illustrates an exemplary quality of service modification procedure.

The present invention will now be described with reference to the accompanying drawings.

Within a packet data network several different types of bearer are defined, such as conversational, streaming, interactive, background. The conversational class typically applies to voice and is characterized by low delay and preservation of time relation between information entities. The streaming class is a one-way transport such as streaming audio or video characterized by preservation of time relation between information entities. The interactive class is based on a request response pattern with preservation of payload content, such as in web browsing. Background traffic class applies to situations where the destination does not impose a deadline for reception and where the payload content is preserved, such as in download of emails.

Different parameters can be used to characterize the Quality of Service (QoS) for each of the different types of bearer. These parameters are:
1. packet precedence class
2. reliability class
3. delay parameter
4. throughput parameter

The packet precedence class signifies the priority of keeping commitments within the network and is invoked during abnormal conditions such as during congestion. The reliability class determines the nature of application data such as being sensitive to errors. The delay parameter determines an acceptable delay for the application. The throughput parameter determines the maximum bit rate and the mean bit rate.

During a Packet Data Protocol (PDP) context establishment for packet data transfer between a subscriber device and a wireless network, these quality of service parameters (or a sub-set of the quality of service parameters) are negotiated relating to the quality of service governing the packet transfer that may take place using the PDP context. In GPRS and UMTS networks the quality of service is associated with a Packet Data Protocol (PDP) context that signifies a particular type of data flow.

In accordance with the invention, pre-calibrated quality of service parameter profiles are created and stored in the subscriber device. These profiles can be either dedicated to a bearer type or can be shared among the bearer types. The profiles may specify all of the quality of service parameters discussed above, but fewer parameters could also be used. In this context it should be noted that for some applications or bearer types one of the parameters can be of overwhelming importance and the other parameters are of lesser importance. Therefore the parameter profiles may relate to only a single parameter.

User driven quality of service profile selection enables the user to select a quality of service without requiring the user to understand any details relating to the technical parameters which are used to characterize the quality of service and are used in quality of service negotiations between the subscriber device controller and the network. At its simplest, the invention enables simple user control, for example by way of up/down keys, of at least one quality of service parameter, such as throughput, for a packet data communication.

In general, in packet-based systems the cost of a packet transfer depends at least partly on the quality of service used to transfer the packet. As a result, the present invention enables the user to affect the cost of the packet transfer by controlling the quality of service used during packet transfer.

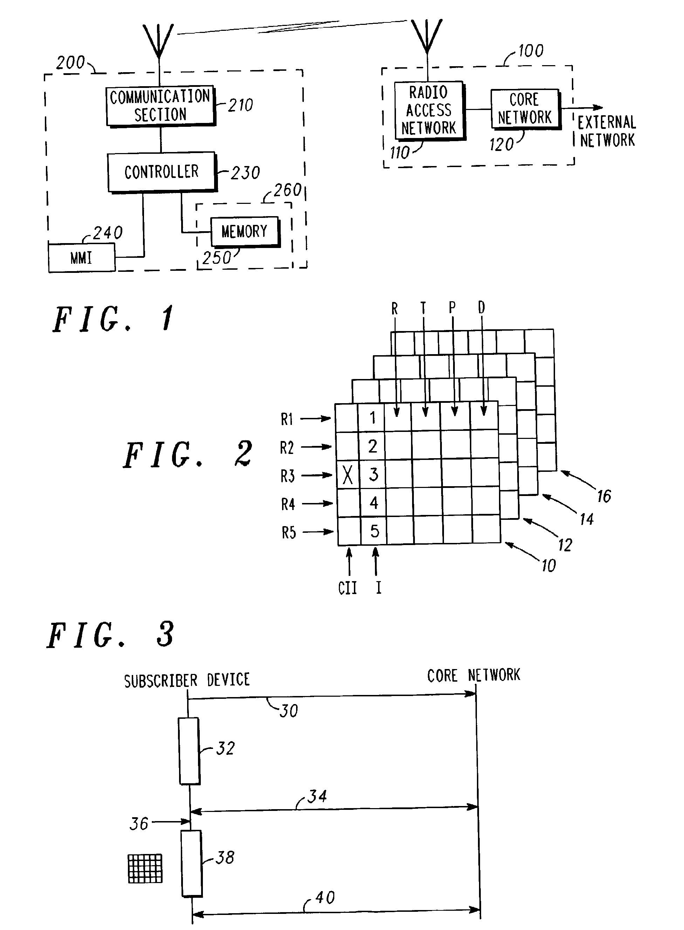

Figure 1 is a schematic illustration of a wireless network 100 and a subscriber device 200 in accordance with an embodiment of the invention. Features of the subscriber device 100 and wireless network 200 which are not relevant to the invention have been omitted, as will be clear to a skilled person.

The wireless network 100 has a radio access network 110 and a core network 120. The core network 120 sets up a Packet Data Protocol (PDP) context for packet-based communications and performs the associated quality of service negotiation using quality of service parameters. The wireless network is in turn connected to external networks (not shown).

Subscriber device 200 has a communication section 210, including an antenna 220 for communicating with the radio access network 110 of the wireless network 100. The communication section 210 is capable of transmitting and receiving packet data in accordance with quality of service parameters.

The operation of the communication section 210 is controlled by controller 230. In addition, the controller 230 carries out quality of service negotiations with the core network 120 relating to a PDP context governing packet data transfer between the subscriber device communication section 210 and the radio access network 110.

The subscriber device 200 also has a man-machine interface (MMI) having a hardware portion 240 and a software portion. The MMI hardware portion 240 is coupled to the controller 230 and serves for the input of data or instructions from the user into the subscriber device 200 and for the output of information to the user from the controller 230. Typically, the MMI hardware portion 240 comprises a keypad, a display, a microphone etc. The software portion of the MMI controls the MMI and is typically run by the controller 230.

The subscriber device also has a memory 250 for storing quality of service parameter profiles for use in the invention, as described below. This memory may be provided as a separate memory, but is more likely to be arranged as part of another memory in the subscriber device, such as a memory storing other operational parameters, for example.

Memory 250 is advantageously implemented in a smart card, such as a Subscriber Identity Module (SIM), or memory removably inserted in the subscriber device (as illustrated by the dotted line 260). The provision of memory 250 in the SIM card is particularly preferable, since it allows a wireless operator to control the quality of service parameter profiles used. Of course a combination of a SIM card and memory in the subscriber device can also be used.

Advantageously, the parameter profiles stored in the memory 250 can be changed by means of an operator download update. Alternatively, an application on the subscriber device may change the parameter profiles stored in the memory 250.

Figure 2 is an exemplary illustration of the quality of service parameter profiles stored in memory of the subscriber device.

Four quality of service parameter profiles (10, 12, 14, 16), corresponding respectively to each of the four different types of bearer namely conversational, streaming, Interactive and background, are stored in the subscriber device. However, it should be noted that one or more profiles per bearer type may be stored, and parameter profiles may be shared across the bearer types.

In the described exemplary embodiment, each of the quality of service parameter profiles (10, 12, 14, 16) is structurally identical, and the structure will now be explained with reference to the quality of service parameter profile 10 for the conversational bearer. However, it should be noted that it is not necessary for the profiles to be structurally identical.

The quality of service parameter profile 10 for the conversational bearer has a plurality of rows R1-R5, each row R1-R5 consisting of default values of the four parameters that define the quality of service (reliability R, throughput T, packet precedence P and delay D). It should be noted that the use of four parameters is not mandatory, and that fewer than or greater than four parameters may be stored. Each row is allocated an index value I.

In the illustrated embodiment there are 5 rows and so the index value I can take a value between 1 and 5. However, the invention is not restricted to the provision of 5 sets of parameters as in the illustrated embodiment of the invention.

In general, the default parameters in each successive row represent an increase or a decrease in the quality of service obtained if the respective default parameters are used to negotiate the quality of service. In the exemplary embodiment illustrated, the quality of service provided by the parameters increases from a minimum in the row with index value 1 to a maximum in the row with index value 5.

In addition, there is a current index indicator CII that indicates the index corresponding to the parameters currently in use. Clearly, the current index indicator CII may be implemented in a number of different ways, depending on the implementation of the table. For example the current index indicator may be a simple pointer to the selected row. The current index indicator CII in the illustrated embodiment of the invention points to index 3.

The table is provided to allow the user easily to alter the QoS, and thus affect the cost of communications, and can be accessed via simple commands in the Man Machine Interface (MMI) of the subscriber device. Two user-controlled events are provided by means of soft keys or a dedicated key or keys or by voice recognition, for example, in conjunction with the MMI.

The first user controlled event triggers a request from the user to the network for an increase in the quality of service, and therefore usually the associated cost, provided by the network to the subscriber device. This may be implemented so that, for example, the user is presented with a menu option or display message inviting the user to press the "+" or increase key to increase the quality of service (or to increase the cost).

The second user controlled event triggers a request from the user to the network for a decrease in the quality of service, and therefore usually the associated cost, provided by the network to the subscriber device. This may be implemented so that, for example, the user is presented with a menu option or display message inviting the user to press the "-" or decrease key to decrease the quality of service (or to decrease the cost).

Each time the user wants to modify the quality of service, or cost, for a data transfer, the user activates the appropriate user controlled event and the selected index of the parameter table, as indicated by the current index indicator CII, is moved from the current index to the adjacent index in the appropriate direction. For example by pressing a "-" or decrease key of the subscriber device MMI as described above, the selected index of the parameter table is moved from the current index to the next index in a reducing quality of service direction. Thus, the current index indicator CII in the illustrated embodiment will be moved from index value 3 to index value 2

The user may be allowed to view the parameter values selected and/or the currently selected index or other quality of service information may be displayed. This optional display step enables the user to review the selection made. The display of the currently selected index or other quality of service information may be useful to the user. For example, the user may wish to use the lowest quality of service, but may be unaware of the current level of service. The display of the newly selected index value 2 provides the opportunity for the user to press the "-" or decrease key of the subscriber device MMI a second time to select index value 1 which provides the lowest quality of service.

The parameter profile 10 is accessed to obtain parameter values corresponding to the newly-selected index value and these parameters are used by the subscriber device controller 230 in a quality of service modification procedure in which the subscriber device controller 230 negotiates with the core network 120 to achieve a modification of the quality of service provided. Of course, it should be noted that the network may not be able to provide the requested modification of the quality of service, for example because the resources required for the modified quality of service are not available or because of internal network issues. Preferably the user is informed whether or not the requested modification has been implemented.

As described above, in response to the user-controllable alteration of the quality of service a choice is made between a preset list of profiles, selected by bearer type or important parameter value, for example. However, the profiles from which the choice is made may be determined by the application.

In another embodiment of the invention key or input pairs, such as up/down and right/left can be used to separately control quality of service control parameters such as throughput and delay, the stored profiles being used to determine the maximum and minimum values for the parameters. The remaining parameters in general are rarely changed.

Figure 3 illustrates an exemplary quality of service modification procedure.

In response to a request from a user to set up a packet data transfer, in step 30 the subscriber device controller 230 initiates a Packet Data Protocol (PDP) context with the core network 120. The subscriber device controller 230 determines the type of bearer needed based on the type of application in the subscriber device requiring the PDP context and the type of call requested, and selects the appropriate parameter profile from the stored parameter profiles 10, 12, 14, 16 which, as indicated above, correspond respectively to each of the four different types of bearer namely conversational, streaming, interactive and background (step 32).

In accordance with one embodiment of the invention, the user may be requested to select an initial quality of service level or index. Otherwise, a default value such as average level of service provided by the parameters of index 3 in the illustrated embodiment of the invention, is selected. This default may be set by the application or by the operator.

The parameter values of the selected index are then used by the subscriber device controller to negotiate the quality of service with the core network, as is known by a skilled person (step 34).

Subsequently, the user may wish to modify the quality of service on the data transfer via a first user controlled event (step 36). For example, the user may request best quality of service for an initial data call and later start a parallel voice call after requesting reduction of the quality of service for the data call.

Thus, as explained previously, to reduce the quality of service the user presses a "-" key of the MMI indicating a request for a reduction in the quality of service. The subscriber device controller 230 selects the appropriate parameter profile and adjusts the selected index value from the default position of 3 to the new decreased index value 2. The parameters corresponding to the selected index value 2 are now read (step 38) and are used by the subscriber device controller 230 to renegotiate the quality of service with the core network 230, as is known by a skilled person (step 40). Once this is implemented, the quality of service for the on-going data call is reduced.

Thus as explained above, the present invention enables a user to select and alter the quality of service for a data transfer in a simple manner, without requiring any user understanding of the technical details involved in managing quality of service.

Cost is usually directly related to quality of service, so the invention also allows the user to control their communication costs.

The selection and alteration of the quality of service is achieved by means of a simple and intuitive MMI in a subscriber device. Thus selection and alteration of the quality of service can be achieved by users with little experience and training.

The subscriber device is provided with parameter profiles selectable by the user via the MMI. The parameter profiles are preferably stored on a Subscriber Identity Module (SIM) of the subscriber device. The provision of the parameter profiles in the SIM allows communications operators some flexibility to provide a default quality of service profile to manage the mix of bearer behaviors on their network and to manage the type of quality of service negotiation on their networks.

As will be apparent to a skilled person, the invention could be implemented in a different form from that shown herein, and so the invention is intended to encompass all arrangements and variations within the scope of the appended claims.

## Claims

1. A subscriber device having user controllable means operable to select the quality of service delivered in a wireless communication between the subscriber device and a communication system.

2. The subscriber device as claimed in claim 1 which, in use, comprises a memory containing a plurality of quality of service parameter profiles.

3. The subscriber device as claimed in claim 2 wherein the memory is provided in a SIM.

4. The subscriber device as claimed in claim 2 or 3 wherein subscriber device is adapted to download one or more quality of service parameters into the memory.

5. The subscriber device as claimed in any preceding claim further comprising a control means for negotiating quality of service delivered in a wireless communication on the basis of a quality of service parameter profile selected by the user.

6. The subscriber device as claimed in any preceding claim having a MMI arranged to enable user selection of a quality of service parameter profile for use in negotiating quality of service delivered in a wireless communication.

7. The subscriber device as claimed in claim 6 wherein the MMI has first means to enable a user selection of a quality of service parameter profile and second means enable user selectable alteration of the or at least one parameter of the selected parameter profile.

8. The subscriber device as claimed in one of claims 2-7 wherein the quality of service parameter profile is selected by the user from a predefined set of quality of service parameter profiles.

9. The subscriber device as claimed in claim 8 wherein the predefined set of quality of service parameter profiles are those associated with at least one of the bearer type, the application, or a particular parameter.

10. The subscriber device as claimed in one of claims 2-9 wherein at least one quality of service parameter profile contains data relating to a plurality of different quality of service parameters.

11. The subscriber device as claimed in one of claims 2-10 wherein at least one quality of service parameter profile contains data limits in respect of at least one quality of service parameter wherein the user can further adjust the parameter value between the limits after selection of the parameter profile.

12. The subscriber device as claimed in one of claims 2-11 wherein at least one quality of service parameter profile contains a plurality of data sets relating to at least one quality of service parameter and means for identifying a selected one of the plurality of data sets.
